# EUROPÄISCHE PATENTSCHRIFT

(11) **EP 4 188 768 B1**
(45) Veröffentlichungstag und Bekanntmachung des Hinweises auf die Patenterteilung: **21.08.2024**
(21) Anmeldenummer: 21749613.2
(22) Anmeldetag: 27.07.2021
(51) Int. Cl.: B60W 60/00, B60W 50/02, B60W 50/029, B62D 15/02, B60W 50/14

(54) **FAHRASSISTENZSYSTEM UND FAHRASSISTENZVERFAHREN FÜR EIN FAHRZEUG**
DRIVING ASSISTANCE SYSTEM AND DRIVING ASSISTANCE METHOD FOR A VEHICLE
SYSTÈME D'AIDE À LA CONDUITE ET PROCÉDÉ D'AIDE À LA CONDUITE POUR UN VÉHICULE

(30) Priorität: 31.07.2020 DE 102020120301
(43) Veröffentlichungstag der Anmeldung: 07.06.2023
(73) Patentinhaber: Bayerische Motoren Werke Aktiengesellschaft, 80809 München (DE)
(72) Erfinder: BERGWEILER, Tobias, 81541 München (DE)
(86) Internationale Anmeldenummer: PCT/EP2021/070933
(87) Internationale Veröffentlichungsnummer: WO 2022/023306

(56) Entgegenhaltungen:
- EP-A1- 3 473 512
- DE-A1- 102015 001 971
- US-A1- 2019 283 768

## Beschreibung

Die vorliegende Erfindung betrifft ein Fahrassistenzsystem für ein Fahrzeug, ein Fahrzeug mit einem solchen Fahrassistenzsystem, ein Fahrassistenzverfahren für ein Fahrzeug und ein Speichermedium zum Ausführen des Fahrassistenzverfahrens. Die vorliegende Erfindung betrifft insbesondere eine stufenweise Plausibilisierung von Reglern für Fahrassistenzsysteme in Fahrzeugen.

### Stand der Technik

Fahrassistenzsysteme zum automatisierten Fahren gewinnen stetig an Bedeutung. Das automatisierte Fahren kann mit verschiedenen Automatisierungsgraden erfolgen. Beispielhafte Automatisierungsgrade sind ein assistiertes, teilautomatisiertes, hochautomatisiertes oder vollautomatisiertes Fahren. Diese Automatisierungsgrade wurden von der Bundesanstalt für Straßenwesen (BASt) definiert (siehe BASt-Publikation "Forschung kompakt", Ausgabe 11/2012). Beispielsweise sind die Fahrzeuge mit Level 4 vollautonom im Stadtbetrieb unterwegs.

Das Fahrassistenzsystem zum automatisierten Fahren verwendet Sensoren, die die Umgebung auf visueller Basis wahrnehmen, sowohl im für den Menschen sichtbaren als auch unsichtbaren Bereich. Die Sensoren können zum Beispiel eine Kamera, ein Radar und/oder ein LiDAR sein. Diese sind neben hochgenauen Karten die hauptsächlichen Signalquellen für Fahrassistenzsysteme zum automatisierten Fahren.

Für das automatisierte Fahren kann ein übergeordneter Regler des Fahrassistenzsystems eine Erwartung bzw. Instruktion an einen untergeordneten Regler des Fahrassistenzsystems ausgegeben. Dabei wird darauf vertraut, dass der untergeordnete Regler nur richtige Werte zurückgibt bzw. korrekte Aktionen ausführt. Dies kann bei einer geforderten hohen Sicherheitsintegrität jedoch unzureichend sein und kann zudem zu Gefahrensituationen im Straßenverkehr führen.

US 2019/283768 A1 beschreibt ein Steuersystem für eine autonome Steuerung eines Fahrzeugs. Das Steuersystem umfasst ein Umweltsensorsystem, ein erstes Steuergerät, eine Aktuatorsteuerung und eine Steuerüberwachungseinheit. Das erste Steuergerät ermittelt mit Umgebungsdaten des Umweltsensorsystems und mit aktuellen Fahrzeugparametern Steuerbefehle für die Aktuatorsteuerung. Die Steuerüberwachungseinheit überprüft das erste Steuergerät in regelmäßigen Intervallen.

EP 3 473 512 A1 offenbart ein Funktionsmodul für ein Fahrassistenzsystem eines Fahrzeugs, zur Steuerung einer Funktion eines Aggregats des Fahrzeugs, mit einer Hauptfunktionseinheit, welche eingerichtet ist, einen Funktionsparametersatz mit mindestens einem Funktionsparameter für eine Steuerung der Funktion des Aggregats zu erzeugen und bereitzustellen, und einer Prüf- und Hilfsfunktionseinheit. Die Prüf- und Hilfsfunktionseinheit ist eingerichtet, um den Funktionsparametersatz der Hauptfunktionseinheit zu prüfen und in Abhängigkeit von einem Ergebnis des Prüfens in einem Normalbetriebsmodus den Funktionsparametersatz der Hauptfunktionseinheit zur Steuerung der Funktion des Aggregats auszugeben und in einem Hilfsbetriebsmodus einen Hilfsparametersatz mit mindestens einem Hilfsparameter zu erzeugen und zur Steuerung der Funktion des Aggregats auszugeben.

DE 10 2015 001971 A1 beschreibt ein Verfahren zur Überwachung eines zur Fahrzeugführung ausgebildeten Fahrerassistenzsystems, wobei das Fahrerassistenzsystem wenigstens einen Fahrzeugführungsbefehl in Abhängigkeit von mittels dem Fahrzeug zugeordneten Umfelderfassungsmitteln erfassten Umfeldparametern und/oder in Abhängigkeit von mittels dem Fahrzeug zugeordneten Fahrzeugzustandserfassungsmitteln erfassten Fahrzeugzustandsparametern ermittelt. Eine Plausibilität des wenigstens einen Fahrzeugführungsbefehls wird durch Vergleich mit einem vorgegebenen plausiblen Grenzwert überwacht.

### Zusammenfassung der Erfindung

Es ist eine Aufgabe der vorliegenden Erfindung, ein Fahrassistenzsystem für ein Fahrzeug, ein Fahrzeug mit einem solchen Fahrassistenzsystem, ein Fahrassistenzverfahren für ein Fahrzeug und ein Speichermedium zum Ausführen des Fahrassistenzverfahrens anzugeben, die eine Zuverlässigkeit des Fahrassistenzsystems verbessern können. Insbesondere ist es eine Aufgabe der vorliegenden Erfindung, eine Sicherheitsintegrität des Fahrassistenzsystems zu verbessern.

Diese Aufgabe wird durch den Gegenstand der unabhängigen Ansprüche gelöst. Vorteilhafte Ausgestaltungen sind in den Unteransprüchen angegeben.

Gemäß einem unabhängigen Aspekt der vorliegenden Erfindung ist ein Fahrassistenzsystem für ein Fahrzeug, insbesondere Kraftfahrzeug, angegeben. Das Fahrassistenzsystem umfasst eine erste Regeleinheit und eine zweite Regeleinheit, wobei die zweite Regeleinheit eingerichtet ist, um von der ersten Regeleinheit Instruktionen zum Ausführen einer Aktion zu empfangen; und wenigstens eine erste Sensoreinheit, die der ersten Regeleinheit zugeordnet ist, wobei die zweite Regeleinheit eingerichtet ist, um die Aktion auszuführen und Informationen in Bezug auf das Ausführen der Aktion an die erste Regeleinheit zu übermitteln, und wobei die erste Regeleinheit eingerichtet ist, um die von der zweiten Regeleinheit empfangenen Informationen basierend auf Sensordaten der wenigstens einen ersten Sensoreinheit zu plausibilisieren.

Erfindungsgemäß überprüft die erste Regeleinheit mittels ihrer eigenen Sensordaten, ob die von der zweiten Regeleinheit bereitgestellten Informationen zum Ausführen der Aktion plausibel sind oder nicht. Beispielsweise kann die zweite Regeleinheit der ersten Regeleinheit mitteilen, dass ein berechneter Krümmungsradius mit einem gefahrenen Krümmungsradius übereinstimmt. Die erste Regeleinheit überprüft diese Information. Wenn die erste Regeleinheit zu dem Schluss kommt, dass die von der zweiten Regeleinheit bereitgestellten Informationen nicht mit den Sensordaten übereinstimmen und daher nicht plausibel sind, kann die erste Regeleinheit geeignete Maßnahmen veranlassen. Eine solche Maßnahme kann zum Beispiel ein Nothalt und/oder eine Warnung an einen Fahrer sein. Hierdurch kann eine Sicherheitsintegrität des Fahrassistenzsystems verbessert werden.

Die von der zweiten Regeleinheit bereitgestellten Informationen können dabei geeignet sein, um das Ausführen der Aktion zu beschreiben. Die von der zweiten Regeleinheit bereitgestellten Informationen können zum Beispiel angeben, dass die Aktion weisungsgemäß ausgeführt wurde. Ergänzend oder alternativ können die von der zweiten Regeleinheit bereitgestellten Informationen Daten und/oder Werte in Bezug auf die ausgeführte Aktion umfassen, die durch die erste Regeleinheit überprüfbar sind. Die Daten und/oder Werte in Bezug auf die ausgeführte Aktion können zum Beispiel einen bestimmten und/oder eingestellten Krümmungsradius einer Kurvenfahrt angeben.

Die Regeleinheiten sind zur Steuerung von Aktionen, Komponenten etc. eingerichtet und werden vielfach in Fahrzeugen eingesetzt. Beispielsweise kann die erste Regeleinheit eingerichtet sein, um eine Position des Fahrzeugs auf einer Fahrbahn zu ermitteln und basierend darauf die zweite Regeleinheit anzusteuern. Die zweite Regeleinheit kann in diesem Beispiel für ein Einstellen eines Krümmungsradius für eine Kurvenfahrt eingerichtet sein. Hierzu kann die zweite Regeleinheit insbesondere die Lenkung des Fahrzeugs über entsprechende Aktoren steuern.

Die erste Regeleinheit und die zweite Regeleinheit sind jedoch nicht auf dieses Beispiel beschränkt und können andere Regeleinheiten eines Fahrzeuges sein, die miteinander interagieren, um Aktionen zum Beispiel im Rahmen eines automatisierten Fahrens auszuführen.

Die erste Regeleinheit und die zweiten Regeleinheit können jeweils wenigstens eine Prozessoreinheit umfassen. Die wenigstens eine Prozessoreinheit der Regeleinheit ist ein programmierbares Rechenwerk, also eine Maschine oder eine elektronische Schaltung, die gemäß übergebenen Befehlen andere Elemente steuert und dabei einen Algorithmus (Prozess) vorantreibt.

Die erste Regeleinheit und die zweite Regeleinheit können in einem gemeinsamen Software- und/oder Hardware-Modul realisiert sein. Alternativ dazu können die erste Regeleinheit und die zweite Regeleinheit jeweils in getrennten Software- und/oder Hardware-Modulen realisiert sein.

Der Begriff "Plausibilisierung" bezieht sich auf eine Überprüfung von Daten und/oder Informationen durch die erste Regeleinheit und/oder zweite Regeleinheit dahingehend, ob diese Daten und/oder Informationen plausibel, also annehmbar, einleuchtend und nachvollziehbar sind oder nicht. Wenn die Daten und/oder Informationen plausibel sind, ist das Ergebnis eine positive Plausibilisierung. Wenn die Daten und/oder Informationen jedoch nicht plausibel sind, ist das Ergebnis eine negative Plausibilisierung.

Vorzugsweise ist die erste Regeleinheit der zweiten Regeleinheit übergeordnet. Der Begriff "übergeordnet" bedeutet dabei, dass die erste Regeleinheit der zweiten Regeleinheit Instruktionen übermittelt, und insbesondere die Instruktionen zum Ausführen der Aktion. Anders gesagt führt die zweite Regeleinheit aus, was die erste Regeleinheit vorgibt, und gibt ein Feedback an die erste Regeleinheit.

Vorzugsweise umfassen die Instruktionen zum Ausführen einer Aktion ein Einstellen eines Krümmungsradius für eine Kurvenfahrt. Anders gesagt ist die "Aktion", die durch die zweite Regeleinheit durchgeführt wird bzw. werden soll, das Einstellen des Krümmungsradius. Die vorliegende Erfindung ist jedoch nicht hierauf begrenzt und die Aktion kann jede andere Aktion sein, die zum Beispiel im Rahmen des automatisierten Fahrens ausgeführt werden soll bzw. ausgeführt wird.

Vorzugsweise umfasst das Fahrassistenzsystem wenigstens eine zweite Sensoreinheit, die der zweiten Regeleinheit zugeordnet ist. Die wenigstens eine zweite Sensoreinheit kann von der wenigstens einen ersten Sensoreinheit verschieden sein. Insbesondere können die wenigstens eine erste Sensoreinheit und die wenigstens eine zweite Sensoreinheit verschiedene Sensortypen umfassen oder sein.

Vorzugsweise sind die wenigstens eine erste Sensoreinheit und die wenigstens eine zweite Sensoreinheit aus der Gruppe ausgewählt, die wenigstens ein LiDAR-System, wenigstens ein Radar-System, wenigstens eine Kamera, wenigstens ein Ultraschall-System, wenigstens einen Laserscanner, wenigstens einen GPS-Sensor und wenigstens einen Inertialsensor bzw. Beschleunigungssensor umfasst, oder die daraus besteht.

Vorzugsweise umfasst das Fahrzeug eine Umgebungssensorik. Die Umgebungssensorik kann wenigstens ein LiDAR-System und/oder wenigstens ein Radar-System und/oder wenigstens eine Kamera und/oder wenigstens ein Ultraschall-System und/oder wenigstens einen Laserscanner umfassen. Die Umgebungssensorik kann Umfelddaten (auch als "Umgebungsdaten" bezeichnet) bereitstellen, die einen Umgebungsbereich des Fahrzeugs abbilden.

In einigen Ausführungsformen ist die wenigstens eine erste Sensoreinheit eine Sensoreinheit der Umgebungssensorik des Fahrzeugs, wie zum Beispiel wenigstens eine Kamera. Ergänzend oder alternativ kann die wenigstens eine zweite Sensoreinheit ein Inertialsensor bzw. Beschleunigungssensor sein.

Vorzugsweise ist die zweite Regeleinheit eingerichtet, um das Ausführen der Aktion basierend auf Sensordaten der wenigstens einen zweiten Sensoreinheit zu plausibilisieren. Die zweite Regeleinheit kann weiter eingerichtet sein, um die Informationen in Bezug auf das Ausführen der Aktion basierend auf einem Ergebnis der durch die zweite Regeleinheit durchgeführten Plausibilisierung zu erzeugen. Damit kann eine erste Stufe der Plausibilisierung durch die zweite Regeleinheit erfolgen, und eine anschließende zweite Stufe der Plausibilisierung kann durch die erste Regeleinheit erfolgen. Somit kann eine hohe Sicherheitsintegrität für das Fahrassistenzsystem bereitgestellt werden.

Vorzugsweise ist das Fahrassistenzsystem eingerichtet, um ein Fahrmanöver, und insbesondere einen Nothalt, zu veranlassen, wenn die durch die erste Regeleinheit durchgeführte Plausibilisierung negativ ist. Die negative Plausibilisierung gibt dabei an, dass die Informationen der zweiten Regeleinheit nicht vertrauenswürdig und potentiell falsch sind. Durch den Nothalt kann eine Gefährdung des Fahrzeugs und von anderen Verkehrsteilnehmern vermieden werden.

Der Nothalt ist ein Fahrmanöver, bei dem das Fahrzeug ein autonomes oder automatisiertes Nothaltefahrmanöver zum Nothalten des Fahrzeugs, beispielsweise auf der Standspur, durchführt. Bei einem solchen autonomen Nothaltefahrmanöver erfolgt die Längs- und Querführung des Fahrzeugs automatisch. Das Fahrerassistenzsystem übernimmt also die Fahrzeugführung, bis das Fahrzeug zum Stillstand gebracht wird. Hierzu steuert das Fahrerassistenzsystem beispielsweise den Antrieb, das Getriebe, die hydraulische Betriebsbremse und die Lenkung.

Ergänzend oder alternativ kann eine Information, und insbesondere eine Warnung, an den Fahrer des Fahrzeugs ausgegeben werden, wenn die durch die erste Regeleinheit durchgeführte Plausibilisierung negativ ist. Die Information kann zum Beispiel angeben, dass eine Fahrfunktion zum automatisierten Fahren abgeschaltet wurde und der Fahrer die Kontrolle über das Fahrzeug übernehmen soll.

Gemäß einem weiteren unabhängigen Aspekt der vorliegenden Erfindung ist ein Fahrzeug, insbesondere Kraftfahrzeug, angegeben. Das Fahrzeug umfasst das Fahrassistenzsystem gemäß den Ausführungsformen der vorliegenden Erfindung.

Der Begriff Fahrzeug umfasst PKW, LKW, Busse, Wohnmobile, Krafträder, etc., die der Beförderung von Personen, Gütern, etc. dienen. Insbesondere umfasst der Begriff Kraftfahrzeuge zur Personenbeförderung.

Vorzugsweise ist das Fahrassistenzsystem zum automatisierten Fahren des Fahrzeugs eingerichtet.

Unter dem Begriff "automatisiertes Fahren" kann im Rahmen des Dokuments ein Fahren mit automatisierter Längs- oder Querführung oder ein autonomes Fahren mit automatisierter Längs- und Querführung verstanden werden. Bei dem automatisierten Fahren kann es sich beispielsweise um ein zeitlich längeres Fahren auf der Autobahn oder um ein zeitlich begrenztes Fahren im Rahmen des Einparkens oder Rangierens handeln. Der Begriff "automatisiertes Fahren" umfasst ein automatisiertes Fahren mit einem beliebigen Automatisierungsgrad. Beispielhafte Automatisierungsgrade sind ein assistiertes, teilautomatisiertes, hochautomatisiertes oder vollautomatisiertes Fahren. Diese Automatisierungsgrade wurden von der Bundesanstalt für Straßenwesen (BASt) definiert (siehe BASt-Publikation "Forschung kompakt", Ausgabe 11/2012).

Beim assistierten Fahren führt der Fahrer dauerhaft die Längs- oder Querführung aus, während das System die jeweils andere Funktion in gewissen Grenzen übernimmt. Beim teilautomatisierten Fahren (TAF) übernimmt das System die Längs- und Querführung für einen gewissen Zeitraum und/oder in spezifischen Situationen, wobei der Fahrer das System wie beim assistierten Fahren dauerhaft überwachen muss. Beim hochautomatisierten Fahren (HAF) übernimmt das System die Längs- und Querführung für einen gewissen Zeitraum, ohne dass der Fahrer das System dauerhaft überwachen muss; der Fahrer muss aber in einer gewissen Zeit in der Lage sein, die Fahrzeugführung zu übernehmen. Beim vollautomatisierten Fahren (VAF) kann das System für einen spezifischen Anwendungsfall das Fahren in allen Situationen automatisch bewältigen; für diesen Anwendungsfall ist kein Fahrer mehr erforderlich.

Die vorstehend genannten vier Automatisierungsgrade entsprechen den SAE-Level 1 bis 4 der Norm SAE J3016 (SAE - Society of Automotive Engineering). Beispielsweise entspricht das hochautomatisierte Fahren (HAF) Level 3 der Norm SAE J3016. Ferner ist in der SAE J3016 noch der SAE-Level 5 als höchster Automatisierungsgrad vorgesehen, der in der Definition der BASt nicht enthalten ist. Der SAE-Level 5 entspricht einem fahrerlosen Fahren, bei dem das System während der ganzen Fahrt alle Situationen wie ein menschlicher Fahrer automatisch bewältigen kann; ein Fahrer ist generell nicht mehr erforderlich.

Gemäß einem weiteren unabhängigen Aspekt der vorliegenden Erfindung ist ein Fahrassistenzverfahren für ein Fahrzeug, insbesondere ein Kraftfahrzeug, angegeben. Das Fahrassistenzverfahren umfasst ein Übermitteln, durch eine erste Regeleinheit, von Instruktionen zum Ausführen einer Aktion an eine zweite Regeleinheit; ein Ausführen der Aktion durch die zweite Regeleinheit; ein Übermitteln, durch die zweite Regeleinheit, von Informationen in Bezug auf das Ausführen der Aktion an die erste Regeleinheit; und ein Plausibilisieren, durch die erste Regeleinheit, der empfangenen Informationen basierend auf Sensordaten wenigstens einer ersten Sensoreinheit, die der ersten Regeleinheit zugeordnet ist.

Das Fahrassistenzverfahren kann die Aspekte des in diesem Dokument beschriebenen Fahrassistenzsystems implementieren.

Gemäß einem weiteren unabhängigen Aspekt der vorliegenden Erfindung ist ein Software (SW) Programm angegeben. Das SW Programm kann eingerichtet werden, um auf einem oder mehreren Prozessoren ausgeführt zu werden, und um dadurch das in diesem Dokument beschriebene Fahrassistenzverfahren auszuführen.

Gemäß einem weiteren unabhängigen Aspekt der vorliegenden Erfindung ist ein Speichermedium angegeben. Das Speichermedium kann ein SW Programm umfassen, welches eingerichtet ist, um auf einem oder mehreren Prozessoren ausgeführt zu werden, und um dadurch das in diesem Dokument beschriebene Fahrassistenzverfahren für ein Fahrzeug auszuführen.

Gemäß einem weiteren unabhängigen Aspekt der vorliegenden Erfindung ist eine Software mit Programmcode zur Durchführung des Fahrassistenzverfahrens, wenn die Software auf einer oder mehreren softwaregesteuerten Einrichtungen abläuft, angegeben.

### Kurze Beschreibung der Zeichnungen

Ausführungsbeispiele der Erfindung sind in den Figuren dargestellt und werden im Folgenden näher beschrieben. Es zeigen:
Figur 1 schematisch ein Fahrassistenzsystem für ein Fahrzeug gemäß Ausführungsformen der vorliegenden Erfindung,
Figur 2 schematisch ein Fahrzeug mit einem Fahrassistenzsystem zum automatisierten Fahren gemäß Ausführungsformen der vorliegenden Erfindung, und Figur 3 ein Flussdiagram eines Fahrassistenzverfahrens für ein Fahrzeug gemäß

### Ausführungsformen der vorliegenden Erfindung.

### Ausführungsformen der Erfindung

Im Folgenden werden, sofern nicht anders vermerkt, für gleiche und gleichwirkende Elemente gleiche Bezugszeichen verwendet.

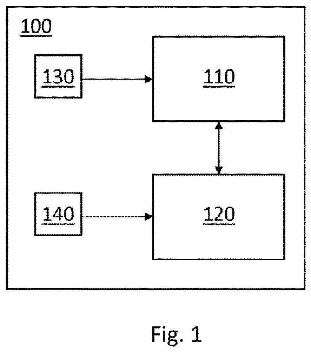

Figur 1 zeigt schematisch ein Fahrassistenzsystem 100 für ein Fahrzeug gemäß Ausführungsformen der vorliegenden Erfindung.

Das Fahrassistenzsystem 100 umfasst eine erste Regeleinheit 110 und eine zweite Regeleinheit 120, wobei die zweite Regeleinheit 120 eingerichtet ist, um von der ersten Regeleinheit 110 Instruktionen zum Ausführen einer Aktion zu empfangen; und wenigstens eine erste Sensoreinheit 130, die der ersten Regeleinheit 110 zugeordnet ist, wobei die zweite Regeleinheit 120 eingerichtet ist, um die Aktion auszuführen und Informationen in Bezug auf das Ausführen der Aktion an die erste Regeleinheit 110 zu übermitteln, und wobei die erste Regeleinheit 110 eingerichtet ist, um die von der zweiten Regeleinheit 120 empfangenen Informationen basierend auf Sensordaten der wenigstens einen ersten Sensoreinheit 130 zu plausibilisieren.

In einigen Ausführungsformen umfasst das Fahrassistenzsystem 100 wenigstens eine zweite Sensoreinheit 140, die der zweiten Regeleinheit 120 zugeordnet ist. Die wenigstens eine zweite Sensoreinheit 140 kann von der wenigstens einen ersten Sensoreinheit 130 verschieden sein. Insbesondere können die wenigstens eine erste Sensoreinheit 130 und die wenigstens eine zweite Sensoreinheit 140 verschiedene Sensortypen umfassen oder sein.

Beispielsweise ist die wenigstens eine erste Sensoreinheit 130 eine Sensoreinheit der Umgebungssensorik des Fahrzeugs 10, wie zum Beispiel eine Kamera. Ergänzend oder alternativ kann die wenigstens eine zweite Sensoreinheit 140 ein Inertialsensor bzw. Beschleunigungssensor sein.

Typischerweise sind die erste Regeleinheit 110 und die zweite Regeleinheit 120 durch eine bidirektionale Kommunikationsverbindung miteinander verbunden. Die erste Regeleinheit 110 und die zweite Regeleinheit 120 können über die bidirektionale Kommunikationsverbindung Daten austauschen, insbesondere in Bezug auf die Instruktionen zum Ausführen einer Aktion und die Informationen in Bezug auf das Ausführen der Aktion. Die bidirektionale Kommunikationsverbindung kann eine drahtgebundene Kommunikationsverbindung oder eine drahtlose Kommunikationsverbindung sein.

Das erfindungsgemäße Fahrassistenzsystem 100 umfasst also wenigstens zwei Regeleinheiten (auch als "Regler" bezeichnet), wobei eine Regeleinheit der anderen Regeleinheit übergeordnet ist, und wobei eine stufenweise Plausibilisierung erfolgt.

Insbesondere fordert die übergeordnete Regeleinheit von der untergeordneten Regeleinheit bestimmte Aktivitäten. Die untergeordnete Regeleinheit gibt anschließend an, ob die Regeleinheit der Auffassung ist, dass keine Fehler bei der Ermittlung/Ausführung der Aktion(en) aufgetreten sind. Dies kann eine erste Stufe der Plausibilisierung sein, die durch die untergeordnete Regeleinheit durchgeführt wird.

Wenn die übergeordnete Regeleinheit die entsprechenden Informationen von der untergeordneten Regeleinheit erhält, wird eine erneute Plausibilisierung durch die übergeordnete Regeleinheit durchgeführt. Nur für den Fall, dass beide Regeleinheiten den Vorgang positiv plausibilisieren, wird der Vorgang (z.B. ein automatisiertes Fahren) auch durchgeführt bzw. weitergeführt.

Sollte die übergeordnete Regeleinheit jedoch nicht positiv plausibilisieren, dann wird der untergeordneten Regeleinheit nicht vertraut und der Vorgang (z.B. das automatisierte Fahren) wird nach vorab definierten Sicherheitsmechanismen abgebrochen. Insbesondere kann ein Nothalt des Fahrzeugs erfolgen. Alternativ kann die Kontrolle des Fahrzeugs vom Fahrassistenzsystem zurück an den Fahrer übergeben werden.

Vorteilhafterweise erfolgt die Plausibilisierung basierend auf unterschiedlicher Sensorik. Beispielsweise kann die untergeordnete Regeleinheit über eine Inertialsensorik plausibilisieren, und die übergeordnete Regeleinheit kann über eine optische Sensorik plausibilisieren.

Eine beispielhafte detaillierte Umsetzung des oben erläuterten allgemeinen Prinzips ist im Folgenden beschrieben.

Für Fahrerassistenzsysteme mit zwei oder mehr interagierenden Regeleinheiten kann die höchstgestellte Regeleinheit diejenige sein, welche die absolute Position des Fahrzeugs auf der Fahrbahn kennt und/oder ermitteln kann. Die übergeordnete Regeleinheit fordert von der untergeordneten Regeleinheit an, dass diese eine Krümmung einstellt, um beispielsweise eine Kurve zu durchfahren.

Die untergeordnete Regeleinheit überprüft dann zum Beispiel mittels Inertialsensoren, ob der berechnete Krümmungsradius mit dem tatsächlich gefahrenen Krümmungsradius übereinstimmt.

Die übergeordnete Regeleinheit überprüft anschließend beispielsweise mittels optischer Sensoren anhand der absoluten Position, ob der von der untergeordneten Regeleinheit eingestellte Krümmungsradius mit dem tatsächlich gefahrenen Krümmungsradius übereinstimmt.

Für den Fall, dass die Krümmungsradien nicht übereinstimmen, kann ein Abbruch des automatisierten Fahrens erfolgen. Dieser Abbruch kann beispielsweise einen Nothalt des Fahrzeugs, eine Warnung an den Fahrer, eine Übergabe der Fahrzeugkontrolle an den Fahrer etc. umfassen oder sein.

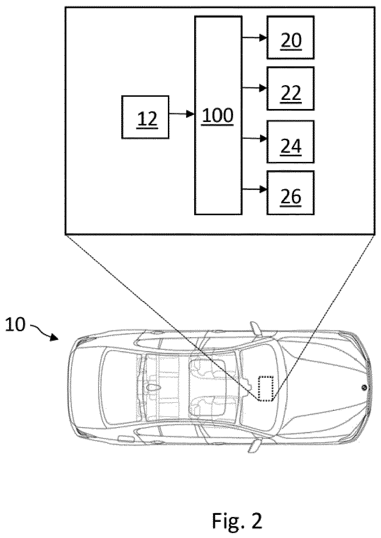

Figur 2 zeigt schematisch ein Fahrzeug 10 mit einem Fahrassistenzsystem 100 zum automatisierten Fahren gemäß Ausführungsformen der vorliegenden Erfindung.

Das Fahrzeug 10 umfasst das Fahrassistenzsystem 100 zum automatisierten Fahren. Beim automatisierten Fahren erfolgt die Längs- und/oder Querführung des Fahrzeugs 10 automatisch. Das Fahrassistenzsystem 100 übernimmt also die Fahrzeugführung. Hierzu steuert das Fahrassistenzsystem 100 den Antrieb 20, das Getriebe 22, die (zum Beispiel hydraulische) Betriebsbremse 24 und die Lenkung 26 über in Figur 2 nicht dargestellte Zwischeneinheiten des Fahrzeugs 10.

Zur Planung und Durchführung des automatisierten Fahrens werden Umfeldinformationen einer Umfeldsensorik, die das Fahrzeugumfeld beobachtet, vom Fahrerassistenzsystem 100 entgegengenommen. Insbesondere kann das Fahrzeug wenigstens einen Umgebungssensor 12 umfassen, der zur Aufnahme von Umgebungsdaten, die das Fahrzeugumfeld angeben, eingerichtet ist. Der wenigstens eine Umgebungssensor 12 kann beispielsweise ein oder mehrere LiDAR-Systeme, ein oder mehrere Radar-Systeme, einen oder mehrere Laserscanner und/oder eine oder mehrere Kameras umfassen.

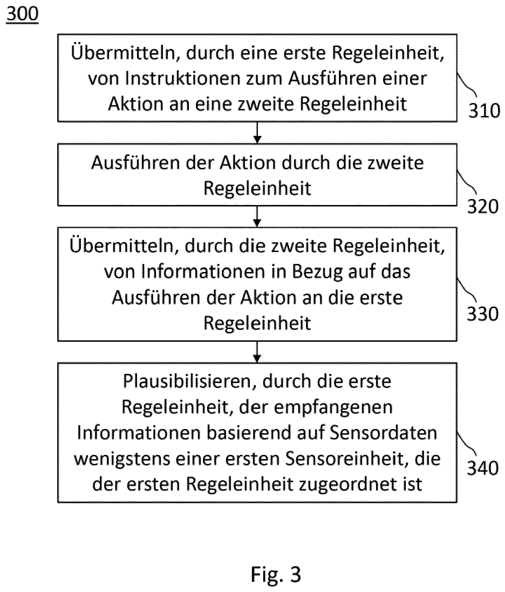

Figur 3 zeigt schematisch ein Flussdiagramm eines Fahrassistenzverfahrens 300 für ein Fahrzeug, insbesondere ein Kraftfahrzeug, gemäß Ausführungsformen der vorliegenden Erfindung.

Das Fahrassistenzverfahren 300 kann durch eine entsprechende Software implementiert werden, die durch einen oder mehrere Prozessoren (z.B. eine CPU) ausführbar ist.

Das Fahrassistenzverfahren 300 umfasst im Block 310 ein Übermitteln, durch eine erste Regeleinheit, von Instruktionen zum Ausführen einer Aktion an eine zweite Regeleinheit; im Block 320 ein Ausführen der Aktion durch die zweite Regeleinheit; im Block 330 ein Übermitteln, durch die zweite Regeleinheit, von Informationen in Bezug auf das Ausführen der Aktion an die erste Regeleinheit; und im Block 340 ein Plausibilisieren, durch die erste Regeleinheit, der empfangenen Informationen basierend auf Sensordaten wenigstens einer ersten Sensoreinheit, die der ersten Regeleinheit zugeordnet ist.

Erfindungsgemäß überprüft die erste Regeleinheit mittels ihrer eigenen Sensordaten, ob die von der zweiten Regeleinheit bereitgestellten Informationen zum Ausführen der Aktion plausibel sind oder nicht. Beispielsweise kann die zweite Regeleinheit der ersten Regeleinheit mitteilen, dass ein berechneter Krümmungsradius mit einem gefahrenen Krümmungsradius übereinstimmt. Die erste Regeleinheit überprüft diese Information. Wenn die erste Regeleinheit zu dem Schluss kommt, dass die von der zweiten Regeleinheit bereitgestellten Informationen nicht mit den Sensordaten übereinstimmen und daher nicht plausibel sind, kann die erste Regeleinheit geeignete Maßnahmen veranlassen. Eine solche Maßnahme kann zum Beispiel ein Nothalt und/oder eine Warnung an einen Fahrer sein. Hierdurch kann eine Sicherheitsintegrität des Fahrassistenzsystems verbessert werden.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung, gemäß den beigefügten Ansprüchen, zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche definiert wird.

## Patentansprüche

1. Fahrassistenzsystem (100) für ein Fahrzeug (10), umfassend:
eine erste Regeleinheit (110) und eine zweite Regeleinheit (120), wobei die zweite Regeleinheit (120) eingerichtet ist, um von der ersten Regeleinheit (110) Instruktionen zum Ausführen einer Aktion zu empfangen; und
wenigstens eine erste Sensoreinheit (130), die der ersten Regeleinheit (110) zugeordnet ist,
wobei die zweite Regeleinheit (120) eingerichtet ist, um die Aktion auszuführen,
**dadurch gekennzeichnet, dass** die zweite Regeleinheit (120) ferner eingerichtet ist, um Informationen in Bezug auf das Ausführen der Aktion an die erste Regeleinheit (110) zu übermitteln, und dass die erste Regeleinheit (110) eingerichtet ist, um die von der zweiten Regeleinheit (120) empfangenen Informationen basierend auf Sensordaten der wenigstens einen ersten Sensoreinheit (130) zu plausibilisieren.

2. Das Fahrassistenzsystem (100) nach Anspruch 1, wobei die erste Regeleinheit (110) der zweiten Regeleinheit (120) übergeordnet ist.

3. Das Fahrassistenzsystem (100) nach Anspruch 1 oder 2, weiter umfassend wenigstens eine zweite Sensoreinheit (140), die der zweiten Regeleinheit (120) zugeordnet ist, insbesondere wobei die wenigstens eine zweite Sensoreinheit (140) von der wenigstens einen ersten Sensoreinheit (130) verschieden ist.

4. Das Fahrassistenzsystem (100) nach Anspruch 3, wobei die zweite Regeleinheit (120) eingerichtet ist, um das Ausführen der Aktion basierend auf Sensordaten der wenigstens einen zweiten Sensoreinheit (140) zu plausibilisieren, und wobei die zweite Regeleinheit (120) weiter eingerichtet ist, um die Informationen in Bezug auf das Ausführen der Aktion basierend auf einem Ergebnis der durch die zweite Regeleinheit (120) durchgeführten Plausibilisierung zu erzeugen.

5. Das Fahrassistenzsystem (100) nach einem der Ansprüche 1 bis 4, wobei das Fahrassistenzsystem (100) eingerichtet ist, um ein Fahrmanöver, und insbesondere einen Nothalt, zu veranlassen, wenn die durch die erste Regeleinheit (110) durchgeführte Plausibilisierung negativ ist.

6. Das Fahrassistenzsystem (100) nach einem der Ansprüche 1 bis 5, wobei die Instruktionen zum Ausführen einer Aktion ein Einstellen eines Krümmungsradius für eine Kurvenfahrt betreffen.

7. Das Fahrassistenzsystem (100) nach einem der Ansprüche 1 bis 6, wobei das Fahrassistenzsystem (100) zum automatisierten Fahren eingerichtet ist.

8. Fahrzeug (10), insbesondere Kraftfahrzeug, umfassend das Fahrassistenzsystem (100) nach einem der Ansprüche 1 bis 7.

9. Fahrassistenzverfahren (300) für ein Fahrzeug, umfassend:
Übermitteln (310), durch eine erste Regeleinheit, von Instruktionen zum Ausführen einer Aktion an eine zweite Regeleinheit;
Ausführen (320) der Aktion durch die zweite Regeleinheit;
**dadurch gekennzeichnet, dass** das Fahrassistenzverfahren (300) weiter umfasst:
Übermitteln (330), durch die zweite Regeleinheit, von Informationen in Bezug auf das Ausführen der Aktion an die erste Regeleinheit; und
Plausibilisieren (340), durch die erste Regeleinheit, der empfangenen Informationen basierend auf Sensordaten wenigstens einer ersten Sensoreinheit, die der ersten Regeleinheit zugeordnet ist.

10. Speichermedium, umfassend ein Software-Programm, das eingerichtet ist, um auf einem oder mehreren Prozessoren ausgeführt zu werden, und um dadurch das Fahrassistenzverfahren (400) gemäß Anspruch 9 auszuführen.

## Claims

1. Driving assistance system (100) for a vehicle (10), comprising:
a first control unit (110) and a second control unit (120), wherein the second control unit (120) is configured to receive instructions for carrying out an action from the first control unit (110); and
at least one first sensor unit (130) that is assigned to the first control unit (110),
wherein the second control unit (120) is configured to carry out the action, **characterized in that** the second control unit (120) is furthermore configured to transmit information in relation to carrying out the action to the first control unit (110), and **in that** the first control unit (110) is configured to check the plausibility of the information received from the second control unit (120) based on sensor data of the at least one first sensor unit (130).

2. Driving assistance system (100) according to Claim 1, wherein the first control unit (110) is superordinate to the second control unit (120).

3. Driving assistance system (100) according to Claim 1 or 2, furthermore comprising at least one second sensor unit (140) that is assigned to the second control unit (120), in particular wherein the at least one second sensor unit (140) is different from the at least one first sensor unit (130).

4. Driving assistance system (100) according to Claim 3, wherein the second control unit (120) is configured to check the plausibility of carrying out the action based on sensor data of the at least one second sensor unit (140), and wherein the second control unit (120) is furthermore configured to generate the information in relation to carrying out the action based on a result of the plausibility check performed by the second control unit (120).

5. Driving assistance system (100) according to one of Claims 1 to 4, wherein the driving assistance system (100) is configured to initiate a driving manoeuvre, and in particular an emergency stop, if the plausibility check performed by the first control unit (110) is negative.

6. Driving assistance system (100) according to one of Claims 1 to 5, wherein the instructions for carrying out an action relate to setting a radius of curvature for cornering.

7. Driving assistance system (100) according to one of Claims 1 to 6, wherein the driving assistance system (100) is configured for automated driving.

8. Vehicle (10), in particular motor vehicle, comprising the driving assistance system (100) according to one of Claims 1 to 7.

9. Driving assistance method (300) for a vehicle, comprising:
a first control unit transmitting (310) instructions for carrying out an action to a second control unit;
the second control unit carrying out (320) the action;
**characterized in that** the driving assistance method (300) furthermore comprises:
the second control unit transmitting (330) information in relation to carrying out the action to the first control unit; and
the first control unit checking the plausibility (340) of the received information based on sensor data of at least one first sensor unit that is assigned to the first control unit.

10. Storage medium comprising a software program that is configured to be executed on one or more processors and thereby to carry out the driving assistance method (400) according to Claim 9.

## Revendications

1. Système d'assistance à la conduite (100) pour un véhicule (10), comprenant :
une première unité de régulation (110) et une deuxième unité de régulation (120), la deuxième unité de régulation (120) étant conçue pour recevoir, de la part de la première unité de régulation (110), des instructions en vue d'exécuter une action ; et
au moins une première unité de capteur (130) qui est associée à la première unité de régulation (110),
la deuxième unité de régulation (120) étant conçue pour exécuter l'action, **caractérisé en ce que** la deuxième unité de régulation (120) est en outre conçue pour communiquer à la première unité de régulation (110) des informations en rapport avec l'exécution de l'action, et **en ce que** la première unité de régulation (110) est conçue pour vérifier la plausibilité des informations reçues de la deuxième unité de régulation (120) sur la base de données de capteur de l'au moins une première unité de capteur (130).

2. Système d'assistance à la conduite (100) selon la revendication 1, la première unité de régulation (110) étant d'un niveau supérieur à la deuxième unité de régulation (120).

3. Système d'assistance à la conduite (100) selon la revendication 1 ou 2, comprenant en outre au moins une deuxième unité de capteur (140), laquelle est associée à la deuxième unité de régulation (120), l'au moins une deuxième unité de capteur (140) étant notamment différente de l'au moins une première unité de capteur (130) .

4. Système d'assistance à la conduite (100) selon la revendication 3, la deuxième unité de régulation (120) étant conçue pour vérifier la plausibilité de l'exécution de l'action sur la base de données de capteur de l'au moins une deuxième unité de capteur (140), et la deuxième unité de régulation (120) étant en outre conçue pour générer les informations en rapport avec l'exécution de l'action sur la base d'un résultat de la vérification de la plausibilité effectuée par la deuxième unité de régulation (120).

5. Système d'assistance à la conduite (100) selon l'une des revendications 1 à 4, le système d'assistance à la conduite (100) étant conçu pour déclencher une manoeuvre de conduite, et notamment un arrêt d'urgence, lorsque la vérification de la plausibilité effectuée par la première unité de régulation (110) est négative.

6. Système d'assistance à la conduite (100) selon l'une des revendications 1 à 5, les instructions pour exécuter une action concernant un réglage d'un rayon de courbure pour une trajectoire en virage.

7. Système d'assistance à la conduite (100) selon l'une des revendications 1 à 6, le système d'assistance à la conduite (100) étant conçu pour la conduite automatisée.

8. Véhicule (10), notamment véhicule automobile, comprenant le système d'assistance à la conduite (100) selon l'une des revendications 1 à 7.

9. Procédé d'assistance à la conduite (300) pour un véhicule, comprenant :
communication (310), par une première unité de régulation à une deuxième unité de commande, d'instructions en vue d'exécuter une action ;
exécution (320) de l'action par la deuxième unité de régulation ;
**caractérisé en ce que** le procédé d'assistance à la conduite (300) comprend en outre :
communication (330), par la deuxième unité de régulation à la première unité de régulation, d'informations en rapport avec l'exécution de l'action ; et
vérification de la plausibilité (340), par la première unité de régulation, des informations reçues sur la base de données de capteur d'au moins une première unité de capteur qui est associée à la première unité de régulation.

10. Support de stockage, comprenant un programme logiciel qui est conçu pour être exécuté sur un ou plusieurs processeurs et pour mettre ainsi en œuvre le procédé d'assistance à la conduite (400) selon la revendication 9.
